(19) Europäisches Patentamt
European Patent Office
Office européen des brevets

(11) EP 2 719 446 A1

(12) **EUROPEAN PATENT APPLICATION**
published in accordance with Art. 153(4) EPC

(43) Date of publication:
16.04.2014 Bulletin 2014/16

(51) Int Cl.:
*B01D 71/56* (2006.01)   *B01D 61/00* (2006.01)
*B01D 69/12* (2006.01)   *B01D 71/46* (2006.01)
*F03B 17/06* (2006.01)   *F03G 7/00* (2006.01)
*F04D 33/00* (2006.01)   *F04F 99/00* (2009.01)

(21) Application number: 12797040.8

(22) Date of filing: 08.06.2012

(86) International application number:
PCT/JP2012/003756

(87) International publication number:
WO 2012/169206 (13.12.2012 Gazette 2012/50)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 08.06.2011 JP 2011128745

(71) Applicant: Nitto Denko Corporation
Ibaraki-shi, Osaka 567-8680 (JP)

(72) Inventors:
• DOI, Takao
Ibaraki-shi
Osaka 567-8680 (JP)
• HAYASHI, Osamu
Ibaraki-shi
Osaka 567-8680 (JP)
• HIROSE, Masahiko
Ibaraki-shi
Osaka 567-8680 (JP)
• KOBUKE, Makoto
Ibaraki-shi
Osaka 567-8680 (JP)
• KAWAGUCHI, Yoshihide
Ibaraki-shi
Osaka 567-8680 (JP)
• HARADA, Noriaki
Ibaraki-shi
Osaka 567-8680 (JP)

(74) Representative: Intès, Didier Gérard André et al
Cabinet Beau de Loménie
158, rue de l'Université
75340 Paris Cedex 07 (FR)

(54) **FORWARD OSMOSIS MEMBRANE FLOW SYSTEM AND COMPOSITE SEMIPERMEABLE MEMBRANE FOR FORWARD OSMOSIS MEMBRANE FLOW SYSTEM**

(57) The forward osmosis membrane flow system (1) includes a high osmotic pressure fluid flow section (2) to which a high osmotic pressure fluid is supplied, a low osmotic pressure fluid flow section (3) to which a low osmotic pressure fluid with a lower osmotic pressure than that of the high osmotic pressure fluid is supplied, and a semipermeable membrane (4) that separates the high osmotic pressure fluid flow section and the low osmotic pressure fluid flow section from each other. A flow rate in the high osmotic pressure fluid flow section (2) is increased by an occurrence of fluid migration from the low osmotic pressure fluid flow section (3) into the high osmotic pressure fluid flow section (2) through the semipermeable membrane (4). The semipermeable membrane (4) is a composite semipermeable membrane with a polyamide-based skin layer formed on a porous epoxy resin membrane.

FIG.1

**Description**

TECHNICAL FIELD

The present invention relates to a forward osmosis membrane flow system and a composite semipermeable membrane used in a forward osmosis membrane flow system.

BACKGROUND ART

An increase in global demand for energy is raising interest in renewable energy sources and an improvement in fuel utilization efficiency. Particularly, in a seawater desalination process using a reverse osmosis membrane, freshwater that is necessary for human life is produced from seawater while generally it is necessary to apply energy of at least osmotic pressure of the seawater and therefore a large amount of energy is required. Furthermore, in the seawater desalination process, since the salt filtered from freshwater exists as concentrated seawater, it is necessary to dispose of it. Usually, such concentrated seawater is mixed with seawater to be discharged into the sea, with its salinity being reduced. On the other hand, there has been proposed a method using a forward osmosis technology in order to dilute the concentrated seawater (see, for example, Patent Literature 1) and a system that can reduce the concentration of concentrated seawater and provide part of the energy required for seawater desalination by carrying out osmotic pressure power generation using the concentrated seawater together with seawater desalination (see, for example, Patent Literature 2).

It can be considered that semipermeable membranes that have been used in the field of reverse osmosis conventionally, such as membranes provided with a cellulose acetate-based skin layer on a support or membranes provided with a polyamide skin layer on a polysulfone support, are used as semipermeable membranes for forward osmosis. However, these membranes exhibit performances and behaviors in forward osmosis that are different from those in reverse osmosis. Therefore, systems using these membranes as forward osmosis membranes do not have a sufficiently high efficiency. Thus, there has been a demand for a further improvement in efficiency of the systems using the forward osmosis technology.

CITATION LIST

Patent Literature

Patent Literature 1 JP 2005-279540 A
Patent Literature 2 JP 2003-176775 A

SUMMARY OF INVENTION

Technical Problem

The present invention is intended to provide a forward osmosis membrane flow system having high efficiency and a composite semipermeable membrane to be used in such a forward osmosis membrane flow system.

Solution to Problem

With the above situations in mind, the present invention provides a forward osmosis membrane flow system that includes a high osmotic pressure fluid flow section to which a high osmotic pressure fluid is supplied, a low osmotic pressure fluid flow section to which a low osmotic pressure fluid with a lower osmotic pressure than that of the high osmotic pressure fluid is supplied, and a semipermeable membrane that separates the high osmotic pressure fluid flow section and the low osmotic pressure fluid flow section from each other, wherein a flow rate in the high osmotic pressure fluid flow section is increased by an occurrence of fluid migration from the low osmotic pressure fluid flow section into the high osmotic pressure fluid flow section through the semipermeable membrane, and the semipermeable membrane is a composite semipermeable membrane with a polyamide-based skin layer formed on a porous epoxy resin membrane.

From another aspect, the present invention provides a composite semipermeable membrane for a forward osmosis membrane flow system that includes a polyamide-based skin layer formed on a porous epoxy resin membrane.

Advantageous Effects of Invention

According to the above-mentioned forward osmosis membrane flow system, since the composite semipermeable membrane has the polyamide-based skin layer formed on the porous epoxy resin membrane, a large amount of fluid moves in the semipermeable membrane in forward osmosis flow (a high permeation flux). Therefore, the forward osmosis membrane flow system has an increased efficiency.

Furthermore, when the above-mentioned composite semipermeable membrane for a forward osmosis membrane flow system is used for a forward osmosis membrane flow system, a large amount of fluid can move in the semipermeable membrane (a high permeation flux). As a result, a forward osmosis membrane flow system having a high efficiency can be obtained.

BRIEF DESCRIPTION OF DRAWINGS

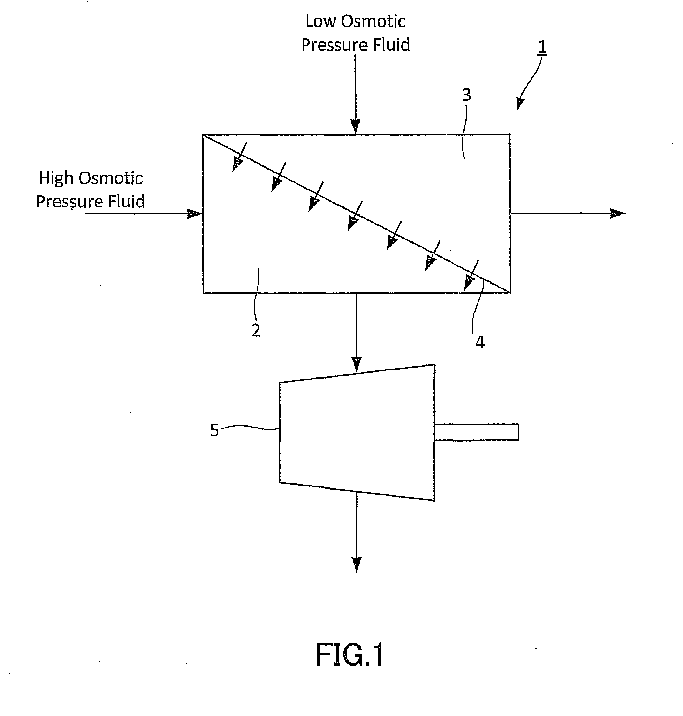

FIG. 1 is a diagram schematically showing a forward osmosis membrane flow system according to the present embodiment.

DESCRIPTION OF EMBODIMENTS

Hereinafter, an embodiment of the present invention is described. However, the following descriptions relate to examples of the present invention and the present invention is not limited by them.

A forward osmosis membrane flow system according to the present embodiment utilizes a forward osmotic phenomenon in which with fluids of different osmotic pressures being supplied to both sides of a semipermeable membrane, respectively, fluid migration occurs from the low osmotic pressure fluid side to the high osmotic pressure fluid side and thereby the flow rate in the high osmotic pressure fluid side is increased. Moreover, the forward osmosis membrane flow system according to the present embodiment employs a composite semipermeable membrane with a polyamide-based skin layer formed on a porous epoxy resin membrane having pores that are communicated with each other by a three-dimensional network structure.

FIG. 1 is a diagram schematically showing a forward osmosis membrane flow system of the present embodiment. A forward osmosis membrane flow system 1 includes a high osmotic pressure fluid flow section 2 to which a high osmotic pressure fluid is supplied, a low osmotic pressure fluid flow section 3 to which a low osmotic pressure fluid with a lower osmotic pressure than that of the high osmotic pressure fluid is supplied, and a semipermeable membrane 4 that separates the high osmotic pressure fluid flow section 2 and the low osmotic pressure fluid flow section 3 from each other. The semipermeable membrane 4 used herein is a composite semipermeable membrane with a polyamide-based skin layer formed on a porous epoxy resin membrane.

The high osmotic pressure fluid is supplied to the high osmotic pressure fluid flow section 2. That is, the high osmotic pressure fluid is supplied to one side of the semipermeable membrane 4. On the other hand, the low osmotic pressure fluid is supplied to the low osmotic pressure fluid flow section 3. That is, the high osmotic pressure fluid is supplied to the other side of the semipermeable membrane 4. Thus, fluid migration occurs from the low osmotic pressure fluid side to the high osmotic pressure fluid side through the semipermeable membrane 4. This fluid migration increases the flow rate in the high osmotic pressure fluid side and thereby the pressure of the high osmotic pressure fluid increases. As shown in FIG. 1, the forward osmosis membrane flow system 1 of the present embodiment further includes a turbine 5. The turbine 5 is rotated by pressure of the high osmotic pressure fluid discharged from the high osmotic pressure fluid flow section 2. Rotation of the turbine 5 generates electric power.

The semipermeable membrane 4 for the forward osmosis membrane flow system 1 according to the present embodiment is a composite semipermeable membrane with a polyamide-based skin layer formed on a porous epoxy resin membrane. In the field of conventional reverse osmosis membranes, in order to improve the permeability, asymmetric supporting membranes whose two sides are different in pore size from each other have been used commonsensically from around the 1970s. As a result of earnest study, the present inventors found that surprisingly, the supporting membranes hindered the flow in the forward osmotic phenomenon. Then, the present inventors used a porous epoxy resin membrane that had a higher self-supporting property than that of supporting membranes used conventionally and that had a three-dimensional network structure and pores communicated with each other. This allowed the semipermeable membrane for the forward osmosis membrane flow system to have a reduced thickness and thereby the efficiency of the forward osmosis membrane flow system was improved.

The forward osmosis membrane flow system 1 of the present embodiment may be configured as a PRO (Pressure Retarded Osmosis) system that applies a lower pressure than the difference between the osmotic pressure of the high osmotic pressure fluid and the osmotic pressure of the low osmotic pressure fluid to the high osmotic pressure fluid in the high osmotic pressure fluid flow section 2. In this case, when the high osmotic pressure fluid is, for example, seawater, the pressure (supply pressure) to be applied to the high osmotic pressure fluid is approximately 3 MPa or lower and preferably 2 MPa or lower. An excessively high supply pressure results in a decrease in flow rate of the osmosis water that undergoes fluid migration from the low osmotic pressure fluid side to the high osmotic pressure fluid side. Furthermore, the supply pressure is not limited as long as it is at least 0.01 MPa, but at least 0.1 MPa is preferable. When the supply pressure is excessively low, the fluid tends to stagnate in the vicinity of the interface of the semipermeable membrane. Therefore, concentration polarization tends to occur and the flow rate of the osmosis water that undergoes fluid migration from the low osmotic pressure fluid side to the high osmotic pressure fluid side tends to decrease with time.

In the forward osmosis membrane flow system 1 of the present embodiment, it is not particularly limited which one of the low osmotic pressure fluid and the high osmotic pressure fluid is supplied to which one of the surfaces of the composite semipermeable membrane. A method generally used is one in which the high osmotic pressure fluid is supplied to the skin layer side of the composite semipermeable membrane. In the present embodiment, however, a method in which the low osmotic pressure fluid is supplied to the skin layer side of the composite semipermeable membrane can also be used preferably. Supply of the low osmotic pressure fluid to the skin layer side can prevent pollutants from easily adhering to the membrane surface and also makes it easy to wash the membrane surface even when pollutants become adhered thereto.

In the forward osmosis membrane flow system 1 of the present embodiment, the porous epoxy resin membrane is used as a support for the semipermeable membrane 4. The porous epoxy resin membrane requires no supporting substrate such as nonwoven fabric, which conventional polysulfone supporting membranes require, and thus has a high self-supporting property. The use of such a supporting membrane with a high self-supporting property allows the support for the semipermeable membrane 4 to have a reduced thickness. Furthermore, the porous epoxy resin membrane may be preferably a symmetric membrane in which the pore size does not vary considerably in the direction of the membrane thickness. As compared to an asymmetric membrane such as a polysulfone supporting membrane, the symmetric membrane prevents pollutants from easily adhering thereto and can suppress the concentration polarization easily.

The porous epoxy resin membrane that can be used in the present embodiment can be produced by dispersing an epoxy resin, a curing agent, and a porogen for forming pores.

Examples of the epoxy resin that is used for the porous epoxy resin membrane include: aromatic epoxy resins such as polyphenyl-based epoxy resins including, for example, bisphenol A type epoxy resins, brominated bisphenol A type epoxy resins, bisphenol F type epoxy resins, bisphenol AD type epoxy resins, stilbene type epoxy resins, biphenyl type epoxy resins, bisphenol A novolac type epoxy resins, cresol novolac type epoxy resins, diaminodiphenylmethane type epoxy resins, and tetrakis(hydroxyphenyl)ethane-based epoxy resins, fluorene-containing epoxy resins, triglycidyl isocyanurate, and epoxy resins containing a heteroaromatic ring (for example, a triazine ring); and non-aromatic epoxy resins such as aliphatic glycidyl ether type epoxy resins, aliphatic glycidyl ester type epoxy resins, cycloaliphatic glycidyl ether type epoxy resins, and cycloaliphatic glycidyl ester type epoxy resins. They may be used alone or two or more of them may be used in combination.

Among them, in order to form a uniform three-dimensional network structure and uniform pores and to ensure chemical resistance and membrane strength, it is preferable to use at least one aromatic epoxy resin selected from the group consisting of bisphenol A type epoxy resins, brominated bisphenol A type epoxy resins, bisphenol F type epoxy resins, bisphenol AD type epoxy resins, fluorene-containing epoxy resins, and triglycidyl isocyanurate; or at least one alicyclic epoxy resin selected from the group consisting of cycloaliphatic glycidyl ether type epoxy resins and cycloaliphatic glycidyl ester type epoxy resins. Particularly, it is preferable to use at least one aromatic epoxy resin selected from the group consisting of bisphenol A type epoxy resins, brominated bisphenol A type epoxy resins, bisphenol AD type epoxy resins, fluorene-containing epoxy resins, and triglycidyl isocyanurate, which have an epoxy equivalent of 6000 or less and a melting point of 170°C or lower; or at least one alicyclic epoxy resin selected from the group consisting of cycloaliphatic glycidyl ether type epoxy resins and cycloaliphatic glycidyl ester type epoxy resins, which have an epoxy equivalent of 6000 or less and a melting point of 170°C or lower.

Examples of the curing agent that can be used in the present embodiment include: aromatic curing agents such as aromatic amines (for example, metaphenylenediamine, diaminodiphenylmethane, diaminodiphenylsulfone, benzyldimethylamine, and dimethylaminomethylbenzene), aromatic acid anhydrides (for example, phthalic anhydride, trimellitic anhydride, and pyromellitic anhydride), phenolic resins, phenolic novolac resins, and heteroaromatic ring-containing amines (for example, triazine ring-containing amines); and non-aromatic curing agents such as aliphatic amines (for example, ethylenediamine, diethylenetriamine, triethylenetetramine, tetraethylenepentamine, iminobispropylamine, bis(hexamethylene)triamine, 1,3,6-trisaminomethylhexane, polymethylenediamine, trimethylhexamethylenediamine, and polyetherdiamine), cycloaliphatic amines (isophoronediamine, menthanediamine, N-aminoethylpiperazine, 3,9-bis(3-aminopropyl)2,4,8,10-tetraoxaspiro(5, 5)undecane adduct, bis(4-amino-3-methylcyclohexyl)methane, bis(4-aminocyclohexyl)methane, and modified products thereof), and aliphatic polyamidoamines composed of polyamines and dimer acids. They may be used alone or two or more of them may be used in combination.

Among them, in order to form a uniform three-dimensional network structure and uniform pores and to ensure membrane strength and elastic modulus, it is preferable to use at least one aromatic amine curing agent selected from the group consisting of metaphenylenediamine, diaminodiphenylmethane, and diaminodiphenylsulfone, which have at least two primary amines per molecule; or at least one alicyclic amine curing agent selected from the group consisting of bis(4-amino-3-methylcyclohexyl)methane and bis(4-aminocyclohexyl)methane, which have at least two primary amines per molecule.

Furthermore, a preferred combination of an epoxy resin and a curing agent is a combination of an aromatic epoxy resin and an alicyclic amine curing agent or a combination of an alicyclic epoxy resin and an aromatic amine curing agent. These combinations each allow the resultant porous epoxy resin membrane to have a high heat resistance and thereby the membrane can be used suitably as a porous support for the composite semipermeable membrane.

The porogen that can be used in the present embodiment is a solvent that can dissolve an epoxy resin and a curing agent and that can cause reaction-induced phase separation after the epoxy resin and the curing agent are polymerized. Examples of the porogen include cellosolves such as methyl cellosolve and ethyl cellosolve, esters such as ethylene glycol monomethyl ether acetate and propylene glycol monomethyl ether acetate, and glycols such as polyethylene glycol and polypropylene glycol. They may be used alone or two or more of them may be used in combination.

Among them, in order to form a uniform three-dimensional network structure and uniform pores, it is preferable to use at least one selected from the group consisting of methyl cellosolve, ethyl cellosolve, polyethylene glycol having a molecular weight of 600 or less, ethylene glycol monomethyl ether acetate, polypropylene glycol, polyoxyethylene monomethyl ether, polyoxyethylene dimethyl ether, and propylene glycol monomethyl ether acetate. Particularly, it is preferable to use at least one selected from the group consisting of polyethylene glycol having a molecular weight of 200 or less, polypropylene glycol having a molecular weight of 500 or less, polyoxyethylene monomethyl ether, and propylene glycol monomethyl ether acetate.

Furthermore, a solvent in which a reactant of the epoxy resin and the curing agent is soluble can be used as the porogen, even if the epoxy resin or the curing agent is individually insoluble or hardly-soluble in the solvent at normal temperature. Examples of such a porogen include a brominated bisphenol A type epoxy resin ("Epicoat 5058", manufactured by Japan Epoxy Resin Co., Ltd.).

For example, the porosity, the average pore size, and the pore size distribution of the porous epoxy resin membrane vary depending on the types and the mixing ratios of the materials such as the epoxy resin, the curing agent, and the porogen to be used and the reaction conditions including the heating temperature and the heating time during reaction-induced phase separation. Therefore, in order to obtain the intended porosity, average pore size, and pore size distribution, it is preferable to prepare a system phase diagram to select optimal conditions. Furthermore, by controlling, for example, the molecular weight of the crosslinked epoxy resin, the molecular weight distribution, the viscosity of the system, and the crosslinking reaction rate during phase separation, a bicontinuous structure of the crosslinked epoxy resin and the porogen can be fixed in a particular state and thereby a stable porous structure can be obtained.

It is preferable that the types and the mixing ratios of the epoxy resin and the curing agent be determined in such a manner as that the ratio of carbon atoms derived from the aromatic ring to the total carbon atoms composing the porous epoxy resin membrane is in the range of 0.1 to 0.65. When the above-mentioned value is lower than 0.1, recognizability of the planar structure of a separation medium, which is a property of the porous epoxy resin membrane, tends to deteriorate. On the other hand, when the value exceeds 0.65, it is difficult to form a uniform three-dimensional network structure.

Furthermore, it is preferable that the mixing ratio of the curing agent to the epoxy resin be such that the curing agent equivalent is 0.6 to 1.5 per equivalent of the epoxy group. When the curing agent equivalent is less than 0.6, the cured product has a lower crosslink density and thereby, for example, the heat resistance and the solvent resistance tend to be reduced. On the other hand, when it exceeds 1.5, an unreacted curing agent remains and tends to hinder the crosslink density from increasing. In the present embodiment, in addition to the above-mentioned curing agent, a curing accelerator may be added to the solution to obtain the intended porous structure. The curing accelerator to be used can be a known one and examples thereof include tertiary amines such as triethylamine and tributylamine, and imidazoles such as 2-phenol-4-methylimidazole, 2-ethyl-4-methylimidazole, and 2-phenol-4,5-dihydroxyimidazole.

In order to form a better skin layer, it is preferable that the porous epoxy resin membrane have an average pore size of 0.01 to 0.4 $\mu$m when measured by a mercury intrusion technique. In order to adjust the average pore size of the porous epoxy resin membrane to 0.01 to 0.4 $\mu$m, it is preferable that 40 to 80 wt% of porogen be used with respect to the total weight of the epoxy resin, the curing agent, and the porogen. When the amount of the porogen is less than 40 wt%, the average pore size of the porous epoxy resin membrane becomes excessively small and thereby pores tend not to be formed. On the other hand, when the amount of the porogen exceeds 80 wt%, the average pore size of the porous epoxy resin membrane becomes too large to allow a uniform skin layer to be formed on a porous body and thereby the salt rejection rate tends to decrease considerably. The average pore size of the porous epoxy resin membrane is preferably 0.05 to 0.3 $\mu$m, more preferably 0.05 to 0.2 $\mu$m. For that purpose, the porogen is used in an amount of preferably 60 to 70 wt%, particularly preferably 60 to 65 wt%.

Furthermore, a method in which at least 2 types of epoxy resins that are different in epoxy equivalent from each other are mixed together and used is also suitable as a method of adjusting the average pore size of the porous epoxy resin membrane to 0.01 to 0.4 $\mu$m. In this case, the difference in epoxy equivalent is preferably at least 100.

Moreover, the average pore size of the porous epoxy resin membrane can be adjusted to be in the intended range by suitably setting various conditions including, for example, the curing temperature and the ratio between the porogen and the epoxy equivalent of the whole.

The porous epoxy resin membrane can be produced by, for example, the following methods.

1) An epoxy resin composition containing an epoxy resin, a curing agent, and a porogen is applied onto a substrate and then the epoxy resin composition thus applied is heated to allow the epoxy resin to be three-dimensionally cross-linked. In this case, a bicontinuous structure is formed by the phase separation between the crosslinked epoxy resin and the porogen. Thereafter, the epoxy resin sheet thus obtained is washed to have the porogen removed therefrom, which is then dried. Thus, a porous epoxy resin membrane having a three-dimensional network structure and pores communicated with each other is produced. The substrate to be used is not particularly limited and examples thereof include a plastic substrate, a glass substrate, and a metal plate.

2) An epoxy resin composition containing an epoxy resin, a curing agent, and a porogen is applied onto a substrate and another substrate is then placed on the epoxy resin composition thus applied. Thus a sandwich structure is produced. In order to allow the distance between the substrates to be uniform, it is preferable that spacers (for example, a double-sided tape) be provided for the four corners of the substrates. Then, the sandwich structure is heated and thereby the epoxy resin is three-dimensionally cross-linked. In this case, a bicontinuous structure is formed by the phase separation between the crosslinked epoxy resin and the porogen. Thereafter, the epoxy resin sheet thus obtained is taken out and is then washed to have the porogen removed therefrom, which is then dried. Thus, a porous epoxy resin membrane having a three-dimensional network structure and pores communicated with each other is produced. The substrate to be used is not particularly limited and examples thereof include a plastic substrate, a glass substrate, and a metal plate. Particularly, it is preferable to use a glass substrate.

3) A mold with a predetermined shape is filled with an epoxy resin composition containing an epoxy resin, a curing agent, and a porogen and a reaction is then promoted to allow the epoxy resin to be three-dimensionally cross-linked. Thus, a cylindrical or columnar resin block is produced. In this case, a bicontinuous structure is formed by the phase separation between the crosslinked epoxy resin and the porogen. Thereafter, while the columnar resin block is rotated around a cylindrical axis or a columnar axis, the surface of the block is cut into a predetermined thickness. Thus, a long epoxy resin sheet is produced. Then, the epoxy resin sheet is washed to have the porogen therein removed therefrom, which is then dried. Thus, a porous epoxy resin membrane having a three-dimensional network structure and pores communicated with each other is produced.

The conditions for curing the epoxy resin composition (for example, thermal curing or room-temperature curing) are not particularly limited. However, in order to form a porous sheet having uniform pores, it is preferable that the epoxy resin composition be cured at room temperature. When the epoxy resin composition is cured at room temperature, the curing is started at approximately 20 to 40°C and the curing time is approximately 3 to 100 hours, preferably approximately 20 to 50 hours. When the epoxy resin composition is thermally cured, the temperature is approximately 40 to 120°C, preferably approximately 60 to 100°C, while the curing time is approximately 10 to 300 minutes, preferably approximately 30 to 180 minutes.

Examples of the solvent to be used for removing the porogen from the resultant epoxy resin sheet include water, DMF, DMSO, THF, and mixed solvents thereof. It is suitably selected depending on the type of the porogen.

The conditions for drying the porous epoxy resin membrane from which the porogen has been removed are not particularly limited, but the temperature is approximately 40 to 120°C and the drying time is approximately 3 minutes to 3 hours.

The thickness of the porous epoxy resin membrane is not particularly limited as long as it satisfies the strength and practicality that are required for manufacturing or using the composite semipermeable membrane. Since the skin layer of the composite semipermeable membrane does not allow a solute to permeate it, a fluid with a high solute concentration tends to stand in the vicinity of the skin layer. This causes a bias in solute concentration in the thickness direction of the composite semipermeable membrane. Generally, such a bias in solute concentration, which is referred to as concentration polarization, results in a reduction in permeation flow rate in the composite semipermeable membrane and a decrease in efficiency of the forward osmosis membrane flow system. The present inventors found that a thinner porous epoxy resin membrane tended to prevent the concentration polarization. On the other hand, when the porous epoxy resin membrane is excessively thin, it is difficult to handle it in forming a skin layer thereon. Furthermore, when the porous epoxy resin membrane is excessively thin, it may be broken in carrying out a forward osmosis process, particularly, a PRO process. From these viewpoints, the thickness of the porous epoxy resin membrane is, for example, at least 10 $\mu$m, preferably at least 20 $\mu$m, and more preferably at least 25 $\mu$m. Moreover, the thickness of the porous epoxy resin membrane is, for example, 150 $\mu$m or less, preferably 100 $\mu$m or less, and more preferably 60 $\mu$m or less. Furthermore, the back side of the porous epoxy resin membrane may be reinforced with, for example, woven fabric or nonwoven fabric.

On the other hand, the skin layer to be formed on the porous epoxy resin membrane in the present embodiment is composed of a polyamide-based resin, and it is preferably a skin layer containing a polyamide-based resin obtained by polymerization of a polyfunctional amine component and a polyfunctional acid halide component.

The polyfunctional amine component is a polyfunctional amine having at least two reactive amino groups and examples thereof include aromatic, aliphatic, and alicyclic polyfunctional amines.

Examples of the aromatic polyfunctional amine include m-phenylenediamine , p-phenylenediamine , o-phenylenediamine , 1,3,5-triaminobenzene, 1,2,4-triaminobenzene, 3,5-diaminobenzoic acid, 2,4-diaminotoluene, 2,6-diaminotoluene, N,N'-dimethyl-m-phenylenediamine, 2,4-diaminoanisole, amidol, and xylylenediamine.

Examples of the aliphatic polyfunctional amine include ethylenediamine, propylenediamine, tris(2-aminoethyl)amine, and n-phenyl-ethylenediamine.

Examples of the alicyclic polyfunctional amine include 1,3-diaminocyclohexane, 1,2-diaminocyclohexane, 1,4-diaminocyclohexane, piperazine, 2,5-dimethylpiperazine, and 4-aminomethylpiperazine.

These polyfunctional amines may be used alone or two or more of them may be used in combination. In order to obtain a skin layer with a higher salt rejection performance, it is preferable to use an aromatic polyfunctional amine.

The polyfunctional acid halide component is a polyfunctional acid halide having at least two reactive carbonyl groups.

Examples of the polyfunctional acid halide include aromatic, aliphatic, and alicyclic polyfunctional acid halides.

Examples of the aromatic polyfunctional acid halide include trimesic acid trichloride, terephthalic acid dichloride, isophthalic acid dichloride, biphenyl dicarboxylic acid dichloride, naphthalene dicarboxylic acid dichloride, benzenetrisulfonic acid trichloride, benzenedisulfonic acid dichloride, and chlorosulfonyl benzenedicarboxylic acid dichloride.

Examples of the aliphatic polyfunctional acid halide include propanedicarboxylic acid dichloride, butane dicarboxylic acid dichloride, pentanedicarboxylic acid dichloride, propane tricarboxylic acid trichloride, butane tricarboxylic acid trichloride, pentane tricarboxylic acid trichloride, glutaryl halide, and adipoyl halide.

Examples of the alicyclic polyfunctional acid halide include cyclopropane tricarboxylic acid trichloride, cyclobutanetetracarboxylic acid tetrachloride, cyclopentane tricarboxylic acid trichloride, cyclopentanetetracarboxylic acid tetrachloride, cyclohexanetricarboxylic acid trichloride, tetrahydrofurantetracarboxylic acid tetrachloride, cyclopentanedicarboxylic acid dichloride, cyclobutanedicarboxylic acid dichloride, cyclohexanedicarboxylic acid dichloride, and tetrahydrofuran dicarboxylic acid dichloride.

These polyfunctional acid halides may be used alone or two or more of them may be used in combination. In order to obtain a skin layer with a higher salt rejection performance, it is preferable to use an aromatic polyfunctional acid halide. Furthermore, it is preferable that a cross-linked structure be formed using a trivalent or higher polyfunctional acid halide for at least a part of the polyfunctional acid halide component.

Moreover, in order to improve the performance of the skin layer containing a polyamide-based resin, for example, a polymer such as polyvinyl alcohol, polyvinylpyrrolidone, or polyacrylic acid and a polyhydric alcohol such as sorbitol or glycerin may be copolymerized.

The method of forming a skin layer containing a polyamide-based resin on the surface of the porous epoxy resin membrane is not particularly limited and any known technique can be used. Examples of the method include an interfacial condensation method, a phase separation method, and a thin film coating method. To be more precise, the interfacial condensation method is, for example, a method in which an amine aqueous solution containing a polyfunctional amine component and an organic solution containing a polyfunctional acid halide component are brought into contact with each other to be interfacially polymerized and thereby a skin layer is formed and then is placed on a porous epoxy resin membrane, or a method in which a skin layer of a polyamide-based resin is formed directly on a porous epoxy resin membrane by interfacial polymerization carried out on the porous epoxy resin membrane. The details of, for example, the conditions for such interfacial condensation methods are described in, for example, JP 58(1983)-24303 A and JP 1(1989)-180208 A. Those known techniques can be used suitably.

In the present embodiment, a preferred method of forming a skin layer is a method in which an aqueous solution coating layer composed of an amine aqueous solution containing a polyfunctional amine component is formed on a porous epoxy resin membrane, and then an organic solution containing a polyfunctional acid halide component and the aqueous solution coating layer are brought into contact with each other to be interfacially polymerized to form a skin layer.

In the interfacial polymerization method, the concentration of the polyfunctional amine component in the amine aqueous solution is not particularly limited but is preferably 0.1 to 5 wt%, more preferably 1 to 4 wt%. An excessively low concentration of the polyfunctional amine component tends to cause defects such as pinholes in the skin layer and tends to deteriorate the salt rejection performance. On the other hand, when the concentration of the polyfunctional amine component is excessively high, the membrane becomes excessively thick and thereby the permeation resistance increases, which results in a tendency of a decrease in the permeation flux.

The concentration of the polyfunctional acid halide component in the organic solution is not particularly limited but is preferably 0.01 to 5 wt%, more preferably 0.05 to 3 wt%. When the concentration of the polyfunctional acid halide component is excessively low, an unreacted polyfunctional amine component tends to remain and thereby defects such as pinholes tend to be caused in the skin layer, which results in a tendency of deterioration in the salt rejection performance. On the other hand, when the concentration of the polyfunctional acid halide component is excessively high, an unreacted polyfunctional acid halide component tends to remain, the membrane becomes excessively thick, and thereby the permeation resistance increases, which results in a tendency of a decrease in the permeation flux.

The organic solvent to be used for the above-mentioned organic solution is not particularly limited as long as it has a low solubility to water, does not deteriorate the porous epoxy resin membrane, and dissolves the polyfunctional acid halide component. Examples of the organic solvent include saturated hydrocarbons such as cyclohexane, heptane, octane, and nonane and halogen-substituted hydrocarbons such as 1,1,2-trichlorotrifluoroethane. The organic solvent is preferably a saturated hydrocarbon having a boiling point of 300°C or lower, more preferably a boiling point of 200°C or lower.

Various additives can be added to the above-mentioned amine aqueous solution and organic solution for the purpose of facilitating the membrane production and improving the performance of the composite semipermeable membrane to be obtained. Example of the additives include surfactants such as sodium dodecylbenzenesulfonate, sodium dodecyl sulfate, and sodium lauryl sulfate, basic compounds such as sodium hydroxide, trisodium phosphate, and triethylamine that remove hydrogen halides produced by polymerization, acylation catalysts, and a compound with a solubility parameter of 8 to 14 $(cal/cm^3)^{1/2}$ described in JP 8(1996)-224452 A.

The time that elapses between the application of the amine aqueous solution onto the porous epoxy resin membrane and the application of the organic solution depends on the composition and viscosity of the amine aqueous solution as well as the pore size at the surface of the porous epoxy resin membrane but is approximately 1 to 180 seconds, preferably 2 to 120 seconds, more preferably 2 to 40 seconds, and particularly preferably 2 to 10 seconds. When the interval between the applications of the solutions is excessively long, the amine aqueous solution permeates and diffuses deep inside the porous epoxy resin membrane, and an unreacted polyfunctional amine component may remain in the porous epoxy resin membrane in a large amount. Furthermore, the unreacted polyfunctional amine component that has permeated deep inside the porous epoxy resin membrane tends not to be removed easily even by a membrane washing treatment that is carried out thereafter. When the interval between the applications of the solutions is excessively short, an excess amine aqueous solution remains in excess, which results in a tendency of a decrease in the membrane performance.

In the present embodiment, it is preferable that after the organic solution and the aqueous solution coating layer composed of the amine aqueous solution are brought into contact with each other, the excess organic solution present on the porous epoxy resin membrane be removed, the formed membrane on the porous epoxy resin membrane be heated at 70°C or higher to be dried, and thus the skin layer be formed. Heating the formed membrane can improve, for example, the mechanical strength and heat resistance thereof. The heating temperature is more preferably 70 to 200°C, particularly preferably 80 to 130°C. The heating time is preferably approximately 30 seconds to 10 minutes, more preferably approximately 40 seconds to 7 minutes.

The thickness of the skin layer formed on the porous epoxy resin membrane is not particularly limited but generally is about 0.05 to 2 $\mu$m, preferably 0.1 to 1 $\mu$m.

The thickness of the composite semipermeable membrane is not particularly limited. From the viewpoints of the strength, the practical water permeability, and the salt rejection property, a surface treatment may be carried out and a reinforcing material may be stacked thereon. The thickness of the composite semipermeable membrane is, for example, 10 to 250 $\mu$m, preferably 10 to 150 $\mu$m.

Furthermore, the shape of the composite semipermeable membrane is not particularly limited. That is, it may be used after being processed into a know form such as a flat membrane form or a spiral element form.

The forward osmosis membrane flow system of the present embodiment can be used as, for example, an osmotic pressure power generation system described in JP 2003-176775 A or a system for diluting a concentrate brine in seawater desalination described in JP 2005-279540 A. In this case, the power density $[W/m^2]$ that is proportional to the power generation amount in the above-mentioned osmotic pressure power generation system can be simply determined by the permeation flux during forward osmosis.

EXAMPLES

Hereinafter, the effects of the present invention are described in detail using specific examples. However, the present invention is not limited to those examples.

<Example 1>

(Production of Porous Epoxy Resin Base Material)

An epoxy resin composition was prepared with 139 parts by weight of bisphenol A type epoxy resin (Epicoat 828, manufactured by Japan Epoxy Resins Co., Ltd.), 93.2 parts by weight of bisphenol A type epoxy resin (Epicoat 1010, manufactured by Japan Epoxy Resins Co., Ltd.), 52 parts by weight of bis(4-aminocyclohexyl)methane, and 500 parts by weight of polyethylene glycol 200 (manufactured by Sanyo Chemical Industries, Ltd). A cylindrical mold (with an outer diameter of 35 cm and an inner diameter of 10.5 cm) was filled with the epoxy resin composition up to a height of 30 cm, which was then room-temperature cured at 25°C for 12 hours and further was allowed to reaction-cured at 130°C for 18 hours. Thus, a cylindrical resin block was produced. While being rotated around the cylindrical axis, the resin block was sliced continuously at a thickness of 145 $\mu$m from the surface thereof using a cutting device (manufactured by Toshiba Machine Co., Ltd.). Thus, a long epoxy resin sheet (with a length of 100 m) was obtained. This epoxy resin sheet was immersed in pure water for 12 hours and thereby polyethylene glycol was removed. This was dried in a dryer at 50°C for approximately four hours and thus a porous epoxy resin membrane (with a thickness of 130 $\mu$m, a porosity of 45%, and an average pore size of 0.04 $\mu$m) was obtained.

(Production of Composite Semipermeable Membrane)

3.0 g of m-phenylenediamine, 0.15 g of sodium lauryl sulfate, 6.0 g of benzenesulfonate, 3.0 g of triethylamine, and 87.85 g of water were mixed together to prepare an aqueous solution (B). The aqueous solution (B) was applied onto a porous epoxy resin membrane that has been subjected to an atmospheric pressure plasma treatment and then an excess amine aqueous solution was removed. Next, an isooctane solution containing 0.2% of trimesic acid chloride was applied onto the porous epoxy resin membrane. Thereafter, an excess isooctane solution was removed and then it was maintained in a dryer at 100°C for two minutes. Thus, a skin layer (with a thickness of approximately 200 nm) composed of polyamide was formed on the porous epoxy resin membrane and thereby a composite semipermeable membrane of Example 1 was obtained. The composite semipermeable membrane according to Example 1 thus finally obtained had a thickness of 130 $\mu$m.

<Example 2 >

A composite semipermeable membrane of Example 2 was obtained in the same manner as in Example 1 except that the cutting thickness of the resin block was changed to 90 $\mu$m in producing the porous epoxy resin membrane. The composite semipermeable membrane according to Example 2 thus finally obtained had a thickness of 80 $\mu$m.

<Example 3 >

A composite semipermeable membrane of Example 2 was obtained in the same manner as in Example 1 except that the cutting thickness of the resin block was changed to 55 $\mu$m in producing the porous epoxy resin membrane. The composite semipermeable membrane according to Example 3 thus finally obtained had a thickness of 50 $\mu$m.

<Comparative Example 1>

A mixed solution of 18.3 wt% of polysulfone (P-3500, manufactured by Solvay Advanced Polymers) and 81, 7 wt% of dimethylformaldehyde was applied onto a polyester nonwoven fabric (70g/m$^2$ with a thickness of 90 $\mu$m). Thereafter, the polyester nonwoven fabric on which the mixed solution had been applied was immersed in pure water at 20°C and further in a pure water at 45°C. Thus, a polysulfone supporting membrane with a thickness of approximately 130 $\mu$m was obtained. The aqueous solution (B) used in the process of producing the composite semipermeable membrane of Example 1 was applied onto the polysulfone supporting membrane, which was then treated in the same manner as in Example 1. Thus, a composite semipermeable membrane of Comparative Example 1 was obtained. The composite semipermeable membrane according to Comparative Example 1 thus finally obtained had a thickness of 130 $\mu$m.

(Measurement of NaCl Rejection Rate by Reverse Osmosis System)

A permeation test was carried out by a reverse osmosis system under the conditions of 25°C, pH 6.5, and an operating pressure of 1.5 MPa using the composite semipermeable membranes produced in Examples 1 to 3 and Comparative Example 1 as reverse osmosis membranes, with 1500 mg/L of NaCl aqueous solution being used as raw water. As a result, the NaCl rejection rate was 99%. In this case, the NaCl rejection rate was determined by the following formula.

$$\text{NaCl Rejection Rate (\%)} = (1\text{-}(\text{NaCl Concentration in Reverse Osmosis}$$
$$\text{Membrane Permeation Liquid / NaCl Concentration in Raw Water}\,)) \times 100$$

(Measurement of Permeation Flux by Forward Osmosis System)

The composite semipermeable membranes produced in Examples 1 to 3 and Comparative Example 1, which were flat membranes, each were cut into predetermined shape and size and then were placed in a cell for flat membrane evaluation (C10-T, manufactured by NITTO DENKO CORPORATION). A tank containing 5 L of NaCl aqueous solution containing 135 g of NaCl dissolved therein was prepared and the NaCl aqueous solution was supplied to the side of the skin layer composed of polyamide at a flow rate of 220 ml/min. Furthermore, a tank containing 5 L of pure water was prepared and pure water was circulated to be supplied to the side of the porous epoxy resin membrane or the side of nonwoven fabric of the polysulfone supporting membrane at a flow rate of 60 ml/min. With this operation, the reduced weight of the pure water tank was measured and was taken as a permeation flux.

With respect to the composite semipermeable membranes according to Examples 1 to 3 and Comparative Example 1, the measurement results obtained by the measurement described above are shown in Table 1.

[Table 1]

| | Skin Layer | Supporting Membrane | Total Thickness [$\mu$m] | Permeation Flux [$m^3/m^2 \cdot d$] | |
| --- | --- | --- | --- | --- | --- |
| | | | | Reverse Osmosis System | Forward Osmosis System |
| Example 1 | Polyamide | Epoxy | 130 | 0.9 | 0.28 |
| Example 2 | Polyamide | Epoxy | 80 | 0.9 | 0.38 |
| Example 3 | Polyamide | Epoxy | 50 | 0.9 | 0.51 |
| Comparative Example 1 | Polyamide | Polysulfone | 130 | 0.9 | 0.14 |

As described above, the composite semipermeable membranes according to Examples 1 to 3 and Comparative Example 1 had the same degree of permeation flux in the reverse osmosis system. On the other hand, the permeation flux in the forward osmosis system of each composite semipermeable membrane according to Example 1 to 3 was at least twice the permeation flux in the forward osmosis system of the composite semipermeable membrane according to Comparative Example 1. Furthermore, in Examples 1 to 3, the thinner the composite semipermeable membrane was, the higher the permeation flux in the forward osmosis system tended to be. In this regard, since the thickness of the porous epoxy resin membrane accounts for a large portion of the thickness of the composite semipermeable membrane, it also can be said that the thinner the porous epoxy resin membrane is, the higher the permeation flux in the forward osmosis system tends to be. Accordingly, it was suggested that the efficiency of the forward osmosis membrane flow system improved when the forward osmosis membrane flow system was configured using a composite semipermeable membrane with a polyamide-based skin layer formed on a porous epoxy resin membrane.

INDUSTRIAL APPLICABILITY

A forward osmosis membrane flow system according to the present invention can be used in, for example, a system for generating electric power with a turbine being rotated or a system for diluting a high osmotic pressure fluid.

DESCRIPTION OF NUMBERS

[0078]

1    Forward Osmosis Membrane Flow System
2    High Osmotic Pressure Fluid Flow Section
3    Low Osmotic Pressure Fluid Flow Section
4    Semipermeable Membrane
5    Turbine

**Claims**

1.  A forward osmosis membrane flow system, comprising:

a high osmotic pressure fluid flow section to which a high osmotic pressure fluid is supplied,

a low osmotic pressure fluid flow section to which a low osmotic pressure fluid with a lower osmotic pressure than that of the high osmotic pressure fluid is supplied, and

a semipermeable membrane that separates the high osmotic pressure fluid flow section and the low osmotic pressure fluid flow section from each other,

wherein a flow rate in the high osmotic pressure fluid flow section is increased by an occurrence of fluid migration from the low osmotic pressure fluid flow section into the high osmotic pressure fluid flow section through the semipermeable membrane, and

the semipermeable membrane is a composite semipermeable membrane with a polyamide-based skin layer formed on a porous epoxy resin membrane.

2. The forward osmosis membrane flow system according to claim 1, wherein the porous epoxy resin membrane has a thickness of 10 to 150 $\mu$m.

3. The forward osmosis membrane flow system according to claim 1 or 2, further comprising a turbine, wherein the turbine is rotated by pressure of the high osmotic pressure fluid discharged from the high osmotic pressure fluid flow section to generate electric power.

4. The forward osmosis membrane flow system according to any one of claims 1 to 3, wherein a lower pressure than the difference between osmotic pressure of the high osmotic pressure fluid and osmotic pressure of the low osmotic pressure fluid is applied to the high osmotic pressure fluid in the high osmotic pressure fluid flow section.

5. The forward osmosis membrane flow system according to claim 4, wherein the pressure applied to the high osmotic pressure fluid is between 0.1 MPa and 3.0 MPa.

6. The forward osmosis membrane flow system according to any one of claims
1 to 5, wherein the low osmotic pressure fluid is supplied to the side of the polyamide-based skin layer of the composite semipermeable membrane.

7. A composite semipermeable membrane for a forward osmosis membrane flow system, comprising a polyamide-based skin layer formed on a porous epoxy resin membrane.

Low Osmotic
Pressure Fluid

High Osmotic
Pressure Fluid

1

3

2

4

5

FIG.1

**EP 2 719 446 A1**

# INTERNATIONAL SEARCH REPORT

International application No.

PCT/JP2012/003756

## A. CLASSIFICATION OF SUBJECT MATTER

*B01D71/56*(2006.01)i, *B01D61/00*(2006.01)i, *B01D69/12*(2006.01)i, *B01D71/46* (2006.01)i, *F03B17/06*(2006.01)i, *F03G7/00*(2006.01)i, *F04D33/00*(2006.01)i, *F04F99/00*(2009.01)i

According to International Patent Classification (IPC) or to both national classification and IPC

## B. FIELDS SEARCHED

Minimum documentation searched (classification system followed by classification symbols)
B01D71/56, B01D61/00, B01D69/12, B01D71/46, F03B17/06, F03G7/00, F04D33/00, F04F99/00

Documentation searched other than minimum documentation to the extent that such documents are included in the fields searched
Jitsuyo Shinan Koho        1922-1996    Jitsuyo Shinan Toroku Koho    1996-2012
Kokai Jitsuyo Shinan Koho    1971-2012    Toroku Jitsuyo Shinan Koho    1994-2012

Electronic data base consulted during the international search (name of data base and, where practicable, search terms used)
JSTPlus/JMEDPlus/JST7580(JDreamII)

## C. DOCUMENTS CONSIDERED TO BE RELEVANT

| Category* | Citation of document, with indication, where appropriate, of the relevant passages | Relevant to claim No. |
|---|---|---|
| Y | JP 2011-83664 A  (Nitto Denko Corp.), 28 April 2011 (28.04.2011), claims 1, 6; paragraphs [0001], [0033]; preparation example 4 (Family: none) | 1-7 |
| Y | JP 2010-121122 A  (Nitto Denko Corp.), 03 June 2010 (03.06.2010), claims 1, 3, 8; paragraphs [0001], [0045]; examples & WO 2010/047383 A1     & CN 102197073 A & KR 10-2011-0079735 A | 1-7 |

☒  Further documents are listed in the continuation of Box C.          ☐  See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 04 September, 2012 (04.09.12) | 11 September, 2012 (11.09.12) |

| Name and mailing address of the ISA/<br>    Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
| --- |
| PCT/JP2012/003756 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2010-99654 A  (Nitto Denko Corp.),<br>06 May 2010 (06.05.2010),<br>claims 1, 2, 5; paragraphs [0001], [0066];<br>examples<br>& EP 2361671 A1          & WO 2010/035807 A1<br>& CN 102099099 A | 1-7 |
| Y | JP 2009-536878 A  (Energy Recovery, Inc.),<br>22 October 2009 (22.10.2009),<br>claims 1, 4<br>& US 2009/0071902 A1     & EP 2021586 A1<br>& WO 2007/134226 A1      & KR 10-2009-0029204 A | 1-7 |
| P,X | WO 2012/001987 A1  (Nitto Denko Corp.),<br>05 January 2012 (05.01.2012),<br>claims 11, 13<br>(Family: none) | 1,2,4,6,7 |

Form PCT/ISA/210 (continuation of second sheet) (July 2009)

## REFERENCES CITED IN THE DESCRIPTION

**Patent documents cited in the description**

- JP 2005279540 A
- JP 2003176775 A
- JP 58024303 A
- JP 1180208 A
- JP 8224452 A